# FASCICULE DE BREVET EUROPEEN

(11) **EP 3 476 717 B1**
(45) Date de publication et mention de la délivrance du brevet: **12.08.2020**
(21) Numéro de dépôt: 18201864.8
(22) Date de dépôt: 22.10.2018
(51) Int. Cl.: B64C 1/14

(54) **PARE-BRISE D'AÉRONEF AVEC UNE GLACE À BRIDE INTÉGRÉE ET ENTRETOISES DE TRANSFERT ET RÉPARTITION DES CHARGES**
WINDSCHUTZSCHEIBE EINES LUFTFAHRZEUGS MIT INTEGRIERTEM FLANSCH UND LASTVERTEILUNGEINSÄTZEN
AIRCRAFT WINDSCREEN WITH INTEGRATED FLANGE AND LOAD DISTRIBUTION INSERTS

(30) Priorité: 24.10.2017 FR 1760038
(43) Date de publication de la demande: 01.05.2019
(73) Titulaire: AIRBUS OPERATIONS, 31060 Toulouse (FR); Airbus, 31700 Blagnac (FR)
(72) Inventeur: CHAUMEL, Pascal, 31830 PLAISANCE DU TOUCH (FR); DENTESANO, Johan, 31770 COLOMIERS (FR); PARKEN, Emily, 31400 TOULOUSE (FR)
(74) Mandataire: Santarelli

(56) Documents cités:
- EP-A1- 1 300 333
- EP-A2- 0 322 776
- FR-A1- 2 899 291
- US-A- 2 507 036
- US-A- 3 382 630

## Description

L'invention concerne un pare-brise d'aéronef et son dispositif de fixation. L'invention s'applique à tous les types d'aéronef muni d'un pare-brise notamment aux avions civils et militaires ainsi qu'aux hélicoptères. L'invention s'applique plus particulièrement aux glaces de pare-brise à montage par l'extérieur.

De nombreuses verrières d'avions possèdent six glaces (deux en position frontale, deux en position latérale et deux en position arrière, par rapport aux pilotes). Les deux glaces frontales sont montées et bridées par l'extérieur de l'avion. En effet, la présence des écrans de navigation du cockpit ne permet pas un montage des glaces frontales par l'intérieur de l'avion.

Il existe principalement deux techniques de fixation pour fixer une glace de pare-brise à la structure primaire d'un aéronef dans le cas d'un montage de la glace par l'extérieur. Il est important de signaler avant tout que le montage d'une glace de pare-brise doit être rapide et facile afin d'en limiter les coûts. Il en va de même du démontage de la glace car celle-ci doit être remplacée plusieurs fois au cours de la vie d'un aéronef et ce remplacement induit une immobilisation coûteuse de l'appareil.

Selon une première technique de fixation par l'extérieur, la glace de pare-brise est directement fixée sur un cadre de la structure de l'aéronef par des vis qui traversent la glace le long de son bord périphérique. Cette première technique présente l'inconvénient majeur que les vis de fixation appliquent des contraintes mécaniques sur la glace de pare-brise ce qui entraîne des risques de la briser. Ces contraintes peuvent notamment être dues à des déformations de la structure de l'aéronef dans des conditions extrêmes de vol et à la différence de dilatation entre la glace de pare-brise, généralement en verre, et le cadre métallique sur lequel elle repose, lors des changements de température qui se produisent lors des phases de montée et de descente de l'aéronef.

Selon la seconde technique de fixation par l'extérieur connue, le bord périphérique de la glace de pare-brise est pincé entre le cadre de la structure primaire de l'aéronef et une bride fixée au cadre par des vis de fixation. Ces vis de fixation ne traversent pas la glace de pare-brise et ne sont pas en contact avec celle-ci, de sorte que les problèmes susmentionnés relativement à la première technique ne se posent pas.

Généralement, les vis de fixation utilisées pour fixer la bride au cadre de structure sont des vis à tête fraisée qui s'intègrent dans l'épaisseur de la bride. L'utilisation de vis à tête fraisée présente de multiples inconvénients, parmi lesquels le fait que ce type de vis impose des tolérances d'usinage sévères en termes d'alignement des trous de fixation réalisés dans le cadre de structure pour recevoir les vis communes à une même bride. Cette grande précision d'usinage se traduit par un coup de réalisation élevée. Un autre inconvénient majeur est la difficulté de démontage du pare-brise lorsque celui-ci doit être remplacé. En effet, les vis à tête fraisée sont difficiles à desserrer surtout lorsqu'elles sont grippées, le risque de grippage étant accru pour des vis reçues dans des trous qui ne sont pas parfaitement alignés. Par ailleurs, les moyens de préhension de ces vis à tête fraisée sont constitués par une empreinte en creux dans la tête qui ne permet pas de contrôler facilement le couple appliqué lors du serrage et qui limite le couple pouvant être appliqué lors du dévissage. De surcroît des glissements répétés du tournevis sur la tête de la vis lors du serrage peuvent endommager cette empreinte de préhension, ce qui rend ensuite le dévissage encore plus difficile.

Certains dispositifs de fixation de pare-brise connus permettent d'utiliser, en lieu et place de vis à tête fraisée, des vis à tête hexagonale dont les moyens de préhension sont réalisés par la tête elle-même et sa forme hexagonale, et dont la surface d'appui sur la bride est sensiblement plane. L'inconvénient de ces vis à tête hexagonale est qu'elles ne permettent pas de garantir une bonne étanchéité à l'air et à l'humidité entre la vis et la bride et qu'il est donc préconisé d'utiliser, en combinaison avec ces vis, un matériau de scellement tel qu'un mastic PR qui nécessite un temps de polymérisation de plusieurs heures (jusqu'à plus de 24h). L'utilisation de ce mastic augmente le temps -et donc le coût- de montage du pare-brise, mais aussi le temps de démontage du pare-brise lorsque celui-ci doit être remplacé car il convient alors de retirer soigneusement toute trace de mastic restant sur le cadre et la bride avant d'installer la glace de pare-brise neuve. Le retrait du mastic nécessite un outil approprié dont l'utilisation n'est pas sans risque pour l'utilisateur et pour la structure de l'aéronef.

EP1300333 a proposé un dispositif de fixation de pare-brise par pincement du bord périphérique de la glace de pare-brise entre un cadre et une bride, permettant d'une part d'utiliser des vis à tête hexagonale et d'autre part de s'affranchir de l'utilisation de mastic polymérisable. L'invention s'applique tout particulièrement à ce dispositif antérieur dont elle constitue un perfectionnement.

L'état de l'art est également illustré par le document US 3,382,630, qui reprend certains éléments des deux techniques de fixation discutées plus haut.

L'invention vise à fournir un pare-brise d'aéronef ayant une glace à montage par l'extérieur dont le dispositif de fixation permet de faciliter les opérations de montage et de démontage, afin de limiter le temps d'immobilisation de l'aéronef lors du remplacement de la glace de pare-brise. Un autre objectif de l'invention est de fournir un dispositif de fixation d'une glace de pare-brise du type à bride fixée par des vis sur un encadrement de la structure primaire de l'aéronef (seconde technique de fixation par l'extérieur rappelée en introduction), permettant d'utiliser des vis à tête hexagonale et permettant de contrôler de façon simple et fiable la précontrainte imposée par les vis de fixation de la bride au bord périphérique de la glace.

Pour ce faire, l'invention propose un pare-brise d'aéronef comprenant :
- une glace feuilletée (c'est-à-dire laminée) comprenant une superposition de plis et ayant un bord périphérique, à noter que les plis de la glace peuvent être en verre, en acrylique ou autre matériau polymérique transparent,
- un encadrement appartenant à une structure primaire de l'aéronef,
- et une bride fixée à l'encadrement par des vis de fixation ayant des têtes de vis escamotées dans l'épaisseur de la bride, la bride étant fixée au bord périphérique de la glace, de sorte que glace et bride forment un ensemble d'un seul tenant que l'on peut qualifier de glace à bride intégrée,
- à chaque vis de fixation de la bride, une entretoise de transfert et répartition des charges est intercalée entre une surface extérieure (surface orientée vers l'extérieur de l'aéronef) de la bride et ladite vis de fixation, une cavité étant ménagée dans la bride pour recevoir l'entretoise, un trou (traversant) étant prévu au fond de la cavité pour le passage de la tige de la vis, l'entretoise de transfert et répartition des charges présentant à son tour une niche pour la réception de la tête de vis et un perçage pour le passage de la tige de vis.

Le pare-brise selon l'invention est caractérisé en ce que la bride est elle aussi laminée c'est-à-dire qu'elle comprend une superposition de plaques, par exemple métalliques. En particulier, la bride selon l'invention comprend une plaque extérieure recouvrant le bord périphérique de la glace feuilletée et une plaque intérieure formant une surface intérieure (orientée vers l'intérieur du cockpit) de la bride dont au moins une partie vient en appui contre une aile de l'encadrement. Par ailleurs, au moins l'une des plaques de la bride, qualifiée de plaque d'ancrage, vient s'encastrer entre deux plis de la glace le long du bord périphérique de la glace.

Comme il sera expliqué plus en détails au cours de la description, il est possible, dans un tel pare-brise, de ne prévoir que des joints secs (à l'instar du dispositif de EP1300333), qui autorisent un démontage et un montage rapide de la glace de pare-brise.

En outre, l'entrelacs des plaques de la bride et des plis de la glace permet de fixer la bride à la plaque, et d'obtenir ainsi une glace à bride intégrée selon l'invention, et ce sans matériau de scellement additionnel (outre le matériau de la couche intercalaire elle-même dans laquelle est encastrée la plaque d'ancrage).

Par ailleurs, l'entretoise de transfert et répartition des charges permet de limiter ponctuellement la pression exercée sur la glace et de contrôler les efforts auxquels celle-ci est soumise.

Selon une caractéristique avantageuse, la cavité et l'entretoise s'enfoncent dans l'épaisseur de la bride au moins jusqu'à la plaque d'ancrage, de préférence jusqu'à la plaque intérieure. En d'autres termes, la cavité et l'entretoise présentent une profondeur (dimension selon une direction orthogonale au plan de la glace) au moins égale à l'épaisseur de l'empilage de plaques formé entre la plaque d'ancrage et la plaque extérieure (y compris ces deux dernières), de sorte que toutes ces plaques sont retenues par l'entretoise lorsqu'elles sont poussées par la glace soumise à la pression régnant dans le cockpit. Autrement dit, toutes les plaques à partir de la plaque d'ancrage sont considérées comme travaillantes. De préférence, l'entretoise retient également la plaque intérieure (et les éventuelles plaques intermédiaires entre la plaque intérieure et la plaque d'ancrage) afin que toutes les plaques de la bride travaillent à retenir la glace ; les efforts de rétention imposés par les vis de fixation sont dans ce cas transmis et répartis sur toutes les plaques de la bride ; le design de l'entretoise est alors optimisé.

Ainsi dimensionnée, l'entretoise remplit pleinement ses fonctions consistant à récupérer les efforts (dus à la différence de pressions entre l'intérieur du cockpit et l'extérieur de l'aéronef, en altitude) exercés par la glace sur la bride et à répartir les efforts imposés sur la bride par les vis de fixation dans l'ensemble des plaques de la bride.

Selon une caractéristique possible, les vis de fixation de la bride sont des vis à tête hexagonale et le fond de la niche de chaque entretoise de transfert et répartition des charges présente une surface plane.

Selon une caractéristique possible, la plaque d'ancrage est une plaque intermédiaire entre la plaque extérieure et la plaque intérieure de la bride. A noter toutefois qu'il ne peut pas s'agir de la plaque adjacente à la plaque extérieure puisque la plaque d'ancrage doit être coincée entre deux plis de la glace, dans une couche intercalaire de la glace.

En variante, la plaque d'ancrage est la plaque intérieure.

Selon une caractéristique possible, la bride comprend deux plaques d'ancrage, c'est-à-dire que deux des plaques de la bride sont encastrées dans la glace feuilletée.

Selon une caractéristique possible, au moins l'une des cavités, et de préférence chaque cavité dans la bride est délimitée par des tranches des plaques de la bride.

De préférence, au moins l'une des cavités, et de préférence chaque cavité dans la bride présente une largeur décroissante depuis l'extérieur de l'aéronef. Chaque cavité présente alors une largeur décroissante depuis la plaque extérieure vers la plaque intérieure de la bride.

Selon une caractéristique possible, au moins une, et de préférence chaque, cavité est délimitée par une paroi présentant au moins un épaulement ou une variation de courbure dans un plan contenant l'axe de la vis, l'épaulement ou variation de courbure formant une surface d'appui pour l'entretoise dirigeant les efforts exercés par la bride sur l'entretoise (et inversement) selon une direction sensiblement parallèle à l'axe de la vis.

Selon une caractéristique possible, au moins l'une des cavités, de préférence chaque cavité, est délimitée par une paroi périphérique comprenant de l'intérieur vers l'extérieur de l'aéronef :
- un trou cylindrique dans la plaque intérieure de la bride, l'entretoise de transfert et répartition des charges ayant une portion inférieure tubulaire cylindrique venant s'insérer dans ce trou pour reposer sur l'encadrement ; cette portion inférieure tubulaire cylindrique de l'entretoise pourrait être supprimée mais elle est avantageuse car elle permet de contrôler la précontrainte imposée à la glace lors du serrage de la vis de fixation ; des dimensions et une rigidité appropriées de cette portion tubulaire cylindrique permettent en effet de fixer cette précontrainte à une valeur souhaitée afin d'éviter que la vis de fixation ne vienne trop écraser le bord périphérique de la glace qui, en tant qu'assemblage collé, présente une certaine fragilité ;
- une portion en escalier formée par des tranches des plaques de la bride, l'entretoise de transfert et répartition des charges ayant une face latérale externe à épaulements successifs complémentaire de cette portion en escalier de la paroi de la cavité.

En variante, au moins l'une des cavités, et de préférence chaque cavité dans la bride est délimitée par une paroi périphérique formée par des tranches des plaques de la bride, laquelle paroi périphérique comprend, de l'extérieur vers l'intérieur de l'aéronef :
- un épaulement supérieur, par exemple à la jonction entre la plaque extérieure et la plaque y adjacente de la bride, épaulement sur lequel une collerette supérieure de l'entretoise de transfert et répartition des charges vient en appui ; en d'autres termes, la tranche de la plaque extérieure de la bride est en retrait radialement par rapport à la tranche de la plaque qui lui est adjacente ; cet épaulement supérieur n'est pas indispensable mais il contribue à un meilleur transfert des efforts,
- une portion tronconique,
- un épaulement inférieur, par exemple à la jonction entre la plaque interne et la plaque y adjacente, ou entre deux plaques intermédiaires, et de préférence au-dessus de la plaque d'ancrage, par exemple à la jonction entre la plaque d'ancrage et la plaque située au-dessus (c'est-à-dire à l'extérieur) de celle-ci,
- un trou cylindrique dans la plaque intérieure de la bride, l'entretoise de transfert et répartition des charges ayant une portion inférieure tubulaire cylindrique venant s'insérer dans ce trou pour reposer sur l'encadrement. L'intérêt de cette portion inférieure tubulaire cylindrique a été précisé supra.

En variante, au moins l'une des cavités, de préférence chaque cavité, est délimitée par une paroi périphérique formée par la face extérieure de la plaque extérieure de la bride, laquelle plaque extérieure est rabattue vers l'intérieur de l'aéronef dans la cavité.

La bride peut aussi comporter des cavités de formes diverses choisies les formes précédemment décrites.

Dans un mode de réalisation possible, sont prévus l'un ou plusieurs, et de préférence l'ensemble, des moyens d'étanchéité suivants :
- pour chaque vis de fixation de la bride, une gorge est ménagée dans une face intérieure de la bride (face de la bride orientée vers l'intérieur de l'aéronef) en regard de l'encadrement autour du trou prévu pour le passage de la tige de vis, cette gorge recevant un joint sec torique ;
- un joint sec périphérique est intercalé entre une face latérale périphérique de la bride et un flanc de l'encadrement, lequel le joint sec périphérique comprend une lèvre encastrée dans une rainure ménagée dans la face latérale périphérique de la bride ;

- un joint périphérique est intercalé entre la plaque extérieure de la bride et la face frontale extérieure de la glace feuilletée, c'est-à-dire entre la plaque extérieure de la bride et le pli extérieur de la glace. De préférence ce joint se prolonge au moins entre le chant périphérique du pli extérieur de la glace et la plaque de bride en regard. Il n'est pas nécessaire que ce joint périphérique soit un joint sec car il n'est pas destiné à être retiré lorsque la glace est changée (l'ensemble glace et bride intégrée étant alors changé), l'utilisation d'un joint périphérique à base d'un matériau polymérisable ne pénalise pas non plus les délais de fabrication de l'aéronef puisque la glace et la bride peuvent être préassemblées en temps masqué. Cela étant, un joint sec sera privilégié ;
- un joint périphérique est intercalé entre la plaque d'ancrage (de la bride) et l'un des deux plis (de la glace) qui sont voisins de la plaque d'ancrage et enserrent celle-ci. De préférence, ce joint est intercalé entre la plaque d'ancrage et celui des plis voisins qui est contigu à la plaque d'ancrage, c'est-à-dire qui touche la plaque d'ancrage (ou plutôt qui la toucherait en l'absence du joint), ce pli étant avantageusement un pli structural épais de la glace feuilletée, de préférence le pli qui est en regard de la plaque d'ancrage du côté intérieur de l'aéronef (les efforts dus à la pressurisation du cockpit ont alors tendance à comprimer le joint). Là encore, ce joint périphérique peut-être un joint polymérisable puisqu'il n'est pas destiné à être retiré lorsque la glace est changée, mais il s'agit de préférence d'un joint sec, par exemple en silicone.

De préférence, à chaque vis de fixation de la bride, un bouchon est prévu pour fermer la niche recevant la tête de vis. Le bouchon peut être fixé dans la niche par emboîtement. À cet effet, l'entretoise de transfert et répartition des charges comprend une collerette interne supérieure qui s'étend radicalement vers l'intérieur de la niche, et le bouchon est muni de crochets à déformation élastique aptes à coopérer avec la collerette interne. Chaque bouchon présente une face supérieure qui affleure la face extérieure de l'entretoise, qui elle-même affleure la face extérieure de la bride afin de limiter les perturbations aérodynamiques engendrées par la présence des cavités dans la bride et des niches dans les entretoises.

Selon une caractéristique possible, la glace intègre un circuit électrique alimenté par un connecteur qui est relié à la glace par un câble électrique sortant de la glace. Dans les pare-brise connus, ce connecteur est directement collé à la face intérieure de la glace.

L'invention s'étend aussi à un pare-brise d'aéronef ou son dispositif de fixation caractérisé en combinaison par tout ou partie des caractéristiques mentionnées ci-avant et ci-après. Autrement dit, toutes les combinaisons possibles à partir des caractéristiques décrites dans la présente demande sont conformes à l'invention dès lors qu'il n'y a pas d'incompatibilité entre les caractéristiques combinées.

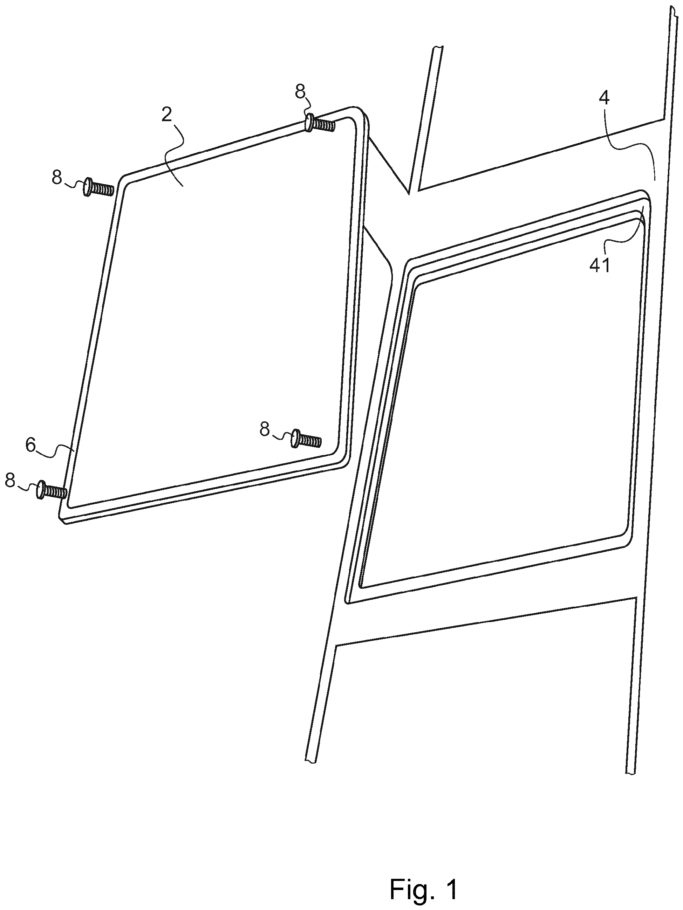

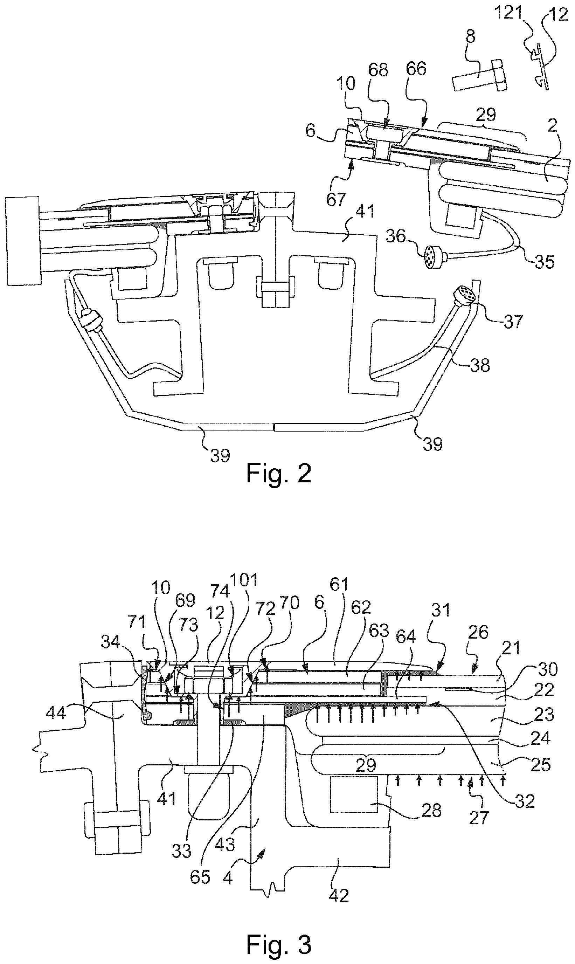

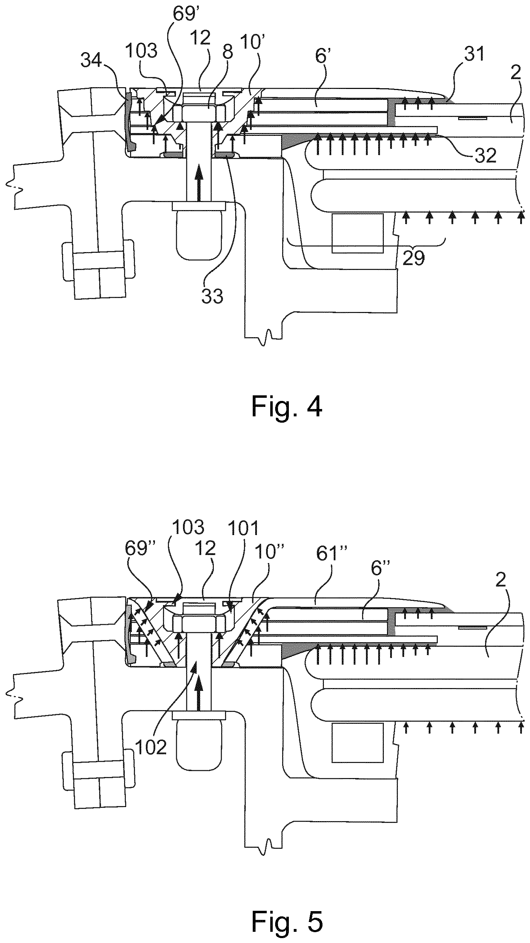

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :
✔ La figure 1 est une vue schématique éclatée, en perspective, d'une glace de pare-brise à montage par l'extérieur de l'art antérieur,
✔ la figure 2 est une vue schématique éclatée, en coupe, d'un pare-brise selon l'invention,
✔ la figure 3 est une vue schématique, en coupe, d'un pare-brise selon l'invention, montrant un premier mode de réalisation de l'entretoise de transfert et répartition des charges proposée par l'invention,
✔ la figure 4 est une vue schématique, en coupe, d'un pare-brise selon l'invention, montrant un deuxième mode de réalisation de l'entretoise de transfert et répartition des charges proposée par l'invention,
✔ la figure 5 est une vue schématique, en coupe, d'un pare-brise selon l'invention, montrant un troisième mode de réalisation de l'entretoise de transfert et répartition des charges proposée par l'invention.

Dans la description détaillée qui suit, les termes "supérieur", "inférieur", "horizontal" ou encore "vertical" sont utilisés en référence à une direction verticale donnée par la hauteur de la planche de dessins considérée et non en référence à la direction donnée par la gravité terrestre, les dispositifs illustrés n'étant pas nécessairement représentés dans une position qui correspond à leur position d'installation dans l'aéronef.

Ainsi par exemple, dans les figures 3 à 5 qui sont des coupes selon des plans contenant l'axe d'une vis de fixation du pare-brise et dans lesquelles l'axe de la vis est représenté verticalement sur la figure, un plan qualifié d'horizontal sur ces figures est un plan orthogonal à l'axe de la vis de fixation et par conséquent sensiblement parallèle au plan de la glace de pare-brise.

Tout pare-brise selon invention comprend (voir notamment fig.1 et 2) une glace 2 à bride 6 intégrée, destinée à être montée sur un encadrement 4 de la structure primaire d'un aéronef. Contrairement aux pare-brise antérieurs connus, dans un pare-brise selon l'invention, la glace 2 et la bride 6 sont préassemblées.

Tout pare-brise selon invention comprend une glace 2 à bride 6 intégrée, destinée à être montée sur un encadrement 4 de la structure primaire d'un aéronef. Contrairement aux pare-brise antérieurs connus, dans un pare-brise selon l'invention la glace 2 et la bride 6 sont préassemblées (voir fig. 2). L'encadrement 4, en revanche, peut être similaire à un encadrement connu.

La bride 6 selon l'invention est une bride laminée. Cela signifie que la bride 6 comprend une superposition de plaques métalliques, au nombre de cinq dans les exemples non limitatifs illustrés. Plus précisément, la bride 6 comporte une plaque extérieure 61, qui forme la face extérieure 66 de la bride, orientée vers l'extérieur de l'aéronef, trois plaques intermédiaires 62, 63 et 64, et une plaque intérieure 65 formant la face intérieure 67 de la bride orientée vers l'intérieur de l'aéronef et dont au moins une partie vient en appui contre l'encadrement 4.

De façon analogue, la glace 2 est une glace feuilletée, ce qui signifie qu'elle comprend une superposition de couches alternant plis en verre (ou autre matériau rigide transparent, par exemple un acrylique) et intercalaires en un matériau de scellement transparent. Plus précisément ici, la glace 2 comprend successivement (de l'extérieur vers l'intérieur de l'aéronef) : un pli extérieur 21 fin, formant la face extérieure 26 de la glace (face orientée vers l'extérieur de l'aéronef), un intercalaire 22 d'épaisseur plus importante dans lequel est noyé un circuit électrique 30, un pli médian 23 épais, un intercalaire 24 d'épaisseur moindre et un pli intérieur 25 épais formant la face intérieure 27 de la glace (face orientée vers l'intérieur de l'aéronef). Les plis médian 23 et intérieur 25 sont des plis structuraux, qui confèrent à la glace sa tenue en flexion. Au niveau de son bord périphérique 29, la glace comprend de plus une cale 28.

L'encadrement 4 comprend :
- un montant 43 qui s'étend dans un plan sensiblement orthogonal au plan de la glace 2,
- une aile 41 qui s'étend dans un plan sensiblement parallèle au plan de la glace 2 et est prolongée par un flanc 44 s'étendant sensiblement orthogonalement au plan de la glace vers l'extérieur,
- un rebord intérieur ou talon 42 s'étendant sensiblement parallèlement au plan de la glace 2 à partir du montant 43.

La bride 6 est fixée à la glace 2 par emboîtement des plaques métalliques de la bride dans le feuilletage de la glace et réciproquement. En d'autres termes, les plis de verre de la glace et les plaques métalliques de la bride sont superposées de façon à ce que, d'une part la plaque extérieure 61 de la bride s'étende par-dessus le pli extérieur 21 de la glace tout le long du bord périphérique 29 de la glace, et d'autre part au moins une plaque métallique 64 de la bride, dite plaque d'ancrage, vienne s'intercaler entre deux plis de verre de la glace, ici les plis 21 et 23, en pénétrant dans une couche intercalaire 22.

Dans le cas d'une glace telle que celle illustrée, qui est conventionnelle en ce qu'elle comprend un pli structural intérieur (le pli 25), un pli structural médian 23 et un pli extérieur 21 plus fin, il est préférable que la plaque d'ancrage selon l'invention s'insère dans la glace au niveau de l'intercalaire 22 entre le pli extérieur fin et le pli structural médian, afin que le pli de la glace supportant le plus d'efforts sous l'effet de la différence de pression entre le cockpit pressurisé et l'extérieur de l'aéronef soit le pli structural médian 23. Dans la configuration illustrée, la plaque d'ancrage est par conséquent la plaque intermédiaire 64. Il pourrait s'agir d'une autre plaque intermédiaire à l'exception de la plaque intermédiaire adjacente à la plaque extérieure. Il pourrait aussi s'agir de la plaque intérieure 65, mais cela aurait pour conséquence de devoir augmenter l'épaisseur de l'intercalaire 22, ce qui n'a pas d'intérêt et n'est donc pas souhaitable (cette augmentation d'épaisseur de l'intercalaire se traduisant par une augmentation inutile de la masse de la glace).

Afin de garantir une bonne fixation de la bride à la glace, la plaque d'ancrage pénètre dans la glace feuilletée sur une profondeur d'ancrage (largeur de la bande de plaque noyée dans la couche intercalaire et enfermée entre les deux plis de verre) par exemple de l'ordre de 15 mm, et de préférence au moins égale à 10 mm. En pratique, cette profondeur d'ancrage dépend de la qualité de l'adhésion de l'intercalaire 22 à la plaque d'ancrage 64.

La face intérieure 67 de la bride est plaquée contre l'aile 41 de l'encadrement. Comme précédemment indiqué, le bord périphérique 29 de la glace 2 est muni d'une cale 28 qui permet de rattraper l'épaisseur de la glace de façon à ce que son bord périphérique repose sur le talon 42 de l'encadrement lorsque la bride portée par la glace repose sur l'aile 41 de l'encadrement. Cette cale 28 permet de d'utiliser des glaces d'épaisseur différentes provenant de fournisseurs différents tout en gardant une interface aéronef identique c'est-à-dire un encadrement ayant des dimensions données fixes. En effet, les glaces proposées par les différents fournisseurs présentent des épaisseurs variables en fonction des matériaux utilisés pour leur fabrication. Si une glace très épaisse est utilisée, cette cale 28 peut disparaître.

La bride 6 est fixée à l'encadrement 4 par l'intermédiaire d'une pluralité de vis 8 à tête hexagonale. Pour ce faire, une cavité 68, délimitée par une paroi périphérique 69, est prévue dans la bride 6 au niveau de chaque vis de fixation 8.

Selon l'invention, une entretoise 10 de transfert et répartition des charges est intercalée entre la vis de fixation 8 et la bride 6 à l'intérieur de la cavité 68. De façon exceptionnelle et par souci de clarté, dans les figures 2 à 5, les pièces coupées ne sont pas hachurées à l'exception de l'entretoise 10.

L'entretoise 10 de transfert et répartition des charges comprend une niche 101 pour la réception de la tête de vis hexagonale de la vis de fixation 8. Au fond de la niche 101, un perçage 102 (voir fig. 5, ce perçage étant commun aux modes de réalisation des figures 3 à 5) permet le passage de la tige de la vis de fixation 8. Dans le fond de la niche 101, la surface de contact entre la tête de vis et l'entretoise est plane. L'entretoise 10 présente par ailleurs une face latérale externe qui est complémentaire de la paroi périphérique 69 de la cavité 68.

Le couple de serrage de la vis de fixation 8, transmis à l'entretoise au niveau de la surface plane de contact (de dimension réduite) entre la tête de vis hexagonale et le fond de la niche 101, est réparti sur la face latérale externe de l'entretoise (de plus grande dimension) lorsqu'il est transmis à la bride 6. L'entretoise 10 permet donc de limiter localement la pression exercée sur la bride en répartissant sur une plus grande surface l'effort reçu de la vis de fixation d'un côté et les efforts exercés par la glace de l'autre sous l'effet de la pressurisation du cockpit (lesquels efforts de pressurisation du cockpit sont représentés par des flèches sur les fig. 3 à 5). Cette répartition permet d'éviter un écrasement de la bride 6 au niveau des vis de fixation et de limiter également la pression exercée ponctuellement sur le bord périphérique de la glace en regard de chacune des vis de fixation.

La cavité 68 et l'entretoise 10 peuvent prendre différentes formes, dont celles illustrées aux figures 3 à 5. Les entretoises 10, 10' et 10" illustrées sur ces trois figures ont notamment en commun d'être symétriques de révolution et de comporter une niche 101 telle que précédemment décrite, mais elles diffèrent de par la forme de leur face latérale externe coïncidant avec la paroi périphérique 69, 69', 69" de la cavité.

Sur la figure 3, on peut observer que la cavité 68 est délimitée par une paroi périphérique 69 formée successivement par (de l'extérieur vers l'intérieur de l'aéronef) la tranche chanfreinée 70 de la plaque extérieure 61 de la bride, un épaulement 71 horizontal à la jonction entre la plaque extérieure 61 et la plaque intermédiaire 62, une portion tronconique 72 formée par les tranches obliques des plaques intermédiaires 62 et 63, un épaulement 73 horizontal à la jonction entre les plaques intermédiaires 63 et 64, une portion cylindrique formée par un trou 74 traversant la plaque intermédiaire 64 et la plaque intérieure 65.

De façon complémentaire, la face latérale externe de l'entretoise 10 présente successivement une collerette supérieure externe à bord chanfreiné, une première portion plane venant en appui sur l'épaulement 71, une portion tronconique en contact avec la portion tronconique 72 de la paroi de la cavité, une seconde portion plane venant en appui sur l'épaulement 73 de la cavité, une portion cylindrique en regard de la portion cylindrique 74 de la cavité, et une extrémité plane qui repose sur l'aile 41 de l'encadrement 4.

Dans la variante illustrée sur la figure 4, la paroi périphérique 69' de la cavité présente une succession de marches formées par des épaulements horizontaux à la jonction entre les différentes plaques métalliques de la bride 6'. Un épaulement supplémentaire est formé dans l'épaisseur de la plaque intérieure afin de garantir une distance calibrée par l'épaisseur de l'entretoise. Cette épaisseur entre la tête de vis hexagonale et l'endroit où l'entretoise est en contact avec l'encadrement 41 permet de ne pas écraser les films de colle qui se situent entre les plaques.

Dans la variante illustrée sur la figure 5, la cavité présente une paroi périphérique 69" lisse globalement tronconique formée par la face extérieure de la plaque extérieure 61" de la bride laquelle plaque extérieure est rabattue vers l'intérieur de la cavité contre les tranches des autres plaques de la bride.

Dans les trois exemples illustrés, l'étanchéité est assurée par quatre joints secs tels des joints en silicone :
- un premier joint sec 31 qui s'étend "horizontalement" entre la plaque extérieure 61 (ou 61' ou 61") de la bride et le pli extérieur 21 de la glace, lequel joint s'étend également "verticalement" entre le chant périphérique du pli extérieur 21 et la bride (ou, plus précisément, la plaque intermédiaire 62) et entre le chant périphérique de l'intercalaire 22 et la bride (ou, plus précisément la plaque intermédiaire 63) ; le joint 31 présente donc une section droite en forme d'équerre,
- un deuxième joint sec 32 qui s'étend "horizontalement" entre la plaque d'ancrage 64 et le pli médian 23 de la glace depuis l'extrémité d'ancrage de la plaque d'ancrage 64 jusqu'à la plaque intérieure 65 de la bride,
- un troisième joint sec 33 torique, entourant la portion tubulaire cylindrique de l'entretoise et la tige de la vis de fixation 8. Ce joint sec torique est écrasé entre la plaque intérieure 65 de la bride et l'aile 41 de l'encadrement. Il est logé dans une gorge ménagée dans la face intérieure de la plaque intérieure 65 (cette gorge pourrait en variante être ménagée sur la face extérieure de l'aile 41),
- un quatrième joint sec 34 coincé entre le bord périphérique de la bride 6, 6', 6" et le flanc 44 de l'encadrement ; ce joint présente de préférence une lèvre, par exemple dans sa partie inférieure, qui vient s'insérer dans une rainure ménagée dans le bord périphérique d'une des plaques de la bride, ici la plaque intérieure 65.

Chaque entretoise 10, 10', 10" présente une face extérieure qui prolonge et affleure la face extérieure 66 de la bride afin de limiter les perturbations aérodynamiques qui pourraient être dues à la présence de la cavité 68 et de l'entretoise.

Pour les mêmes raisons, la niche 101 de chacune des entretoises est fermée par un bouchon 12 dont la face extérieure s'étend au niveau de la face extérieure 66 de la bride. Afin d'en faciliter la mise en place, ce bouchon 12 comprend de préférence des crochets 121 (voir fig.2) à déformation élastique qui viennent s'appuyer contre une collerette interne 103 de l'entretoise (c'est-à-dire une collerette s'étendant radicalement vers l'intérieur de l'entretoise). Lorsque l'on met en place un bouchon en le présentant au-dessus de la niche et en pressant celui-ci par l'extérieur contre l'entretoise, les crochets 121 du bouchon sont repoussés élastiquement par la collerette interne 103 vers le centre pour permettre leur insertion dans la niche puis ils s'écartent de nouveau pour venir s'appuyer contre la collerette 103 à l'intérieur de la niche lorsque le bouchon est complètement emboîté.

Un trou (non représenté) de petite section, par exemple de diamètre de l'ordre de 0,5 mm, est de préférence prévu dans la face extérieure du bouchon 12 pour permettre d'équilibrer la pression entre l'extérieur de l'aéronef et la niche recevant la tête de vis. Ce trou présente aussi l'avantage de faciliter l'extraction du bouchon par un outil approprié lors du remplacement de la glace.

De façon usuelle, la glace 2 intègre un circuit électrique 30 terminé par un connecteur 36 destiné être enfiché dans un connecteur complémentaire 37 solidaire de la structure primaire de l'aéronef. De façon connue, le connecteur 37 peut être relié à un câble 38 émergeant de l'encadrement 4, lequel câble 38 est alimenté en électricité par le réseau électrique primaire de l'aéronef. Dans les pare-brise connus, le connecteur 36 du circuit électrique de la glace est directement fixé au pli intérieur 25 de la glace. L'ajout, selon l'invention d'un câble 35 entre la glace et le connecteur 36 permet de pouvoir brancher et débrancher le connecteur 36 au connecteur 37 sans avoir à démonter le couvre-joint 39 à l'intérieur du cockpit pour accéder au connecteur. Cette caractéristique supplémentaire réduit par conséquent plus encore le temps de remplacement d'un pare-brise selon l'invention.

En outre, l'inconvénient d'un connecteur collé à la glace comme dans l'état de la technique est qu'il masque une partie du champ de vision offert par la glace. En déportant ce connecteur au bout d'un câble d'environ 20 cm par exemple, on gagne non seulement en facilité d'accès pour la connexion/déconnexion, mais aussi en visibilité puisque, une fois branchés, les connecteurs peuvent être logés dans le volume délimité le talon 42 de l'encadrement et le couvre-joint 39.

L'invention s'étend à toute variante accessible à l'homme du métier c'est-à-dire à toute variante entrant dans le cadre délimité par les revendications annexées.

## Revendications

1. Pare-brise d'aéronef comprenant :
- une glace (2) feuilletée comprenant une superposition de plis et ayant un bord périphérique (29),
- un encadrement (4) appartenant à une structure primaire de l'aéronef,
- et une bride (6) fixée à l'encadrement par des vis de fixation (8) ayant des têtes de vis escamotées dans l'épaisseur de la bride,
- à chaque vis de fixation (8), une entretoise (10, 10', 10") de transfert et répartition des charges est intercalée entre une surface extérieure (66) de la bride et ladite vis de fixation (8), une cavité (68) étant ménagée dans la bride pour recevoir l'entretoise de transfert et répartition des charges, un trou (74) étant prévu au fond de la cavité pour le passage d'une tige de vis de la vis de fixation, l'entretoise de transfert et répartition des charges présentant une niche (101) pour la réception de la tête de vis et un perçage (102) pour le passage de la tige de vis,
**caractérisé en ce que** la bride est fixée au bord périphérique (29) de la glace et comprend une superposition de plaques dont une plaque extérieure (61, 61', 61") recouvrant le bord périphérique (29) de la glace feuilletée et une plaque intérieure (65) formant une surface intérieure de la bride dont au moins une partie vient en appui contre une aile (41) de l'encadrement, et **en ce qu'**au moins l'une des plaques de la bride (64), qualifiée de plaque d'ancrage, vient s'encastrer entre deux plis (21, 23) de la glace le long du bord périphérique (29) de la glace.

2. Pare-brise d'aéronef selon la revendication 1, **caractérisé en ce que** la cavité (68) et l'entretoise (10, 10', 10") s'enfoncent dans l'épaisseur de la bride au moins jusqu'à la plaque d'ancrage (64).

3. Pare-brise d'aéronef selon l'une des revendications 1 ou 2, **caractérisé en ce que** les vis de fixation (8) sont des vis à tête hexagonale et **en ce que** la niche (101) des entretoises de transfert et répartition des charges présente un fond à surface plane.

4. Pare-brise d'aéronef selon l'une des revendications précédentes, **caractérisé en ce que** la plaque d'ancrage (64) est une plaque intermédiaire entre la plaque extérieure (61) et la plaque intérieure (65).

5. Pare-brise d'aéronef selon l'une des revendications précédentes, **caractérisé en ce que** la plaque d'ancrage (64) pénètre dans la glace feuilletée sur une profondeur d'ancrage au moins égale à 10 mm.

6. Pare-brise d'aéronef selon l'une des revendications précédentes, **caractérisé en ce que** chaque cavité présente une largeur décroissante depuis l'extérieur de l'aéronef.

7. Pare-brise d'aéronef selon l'une des revendications précédentes, **caractérisé en ce que** au moins une cavité (68) est délimitée par une paroi périphérique (69, 69') formée par des tranches des plaques de la bride.

8. Pare-brise d'aéronef selon l'une des revendications précédentes, **caractérisé en ce qu'**au moins une cavité est délimitée par une paroi périphérique (69') comprenant, de l'intérieur vers l'extérieur de l'aéronef :
- la paroi du trou (74) prévu dans la plaque intérieure (65) de la bride (6') pour le passage de la tige de vis, l'entretoise (10') de transfert et répartition des charges ayant une portion inférieure tubulaire cylindrique venant s'insérer dans ce trou (74) pour reposer sur l'encadrement,
- une portion en escalier formée par des tranches des plaques de la bride, l'entretoise (10') de transfert et répartition des charges ayant une face latérale externe à épaulements successifs complémentaire de la portion en escalier de la paroi périphérique de la cavité.

9. Pare-brise d'aéronef selon l'une des revendications précédentes, **caractérisé en ce qu'**au moins l'une des cavités (68) est délimitée par une paroi (69), formée par des tranches des plaques de la bride et qui comprend, de l'extérieur vers l'intérieur de l'aéronef :
- un épaulement supérieur (71) à la jonction entre la plaque extérieure (61) et la plaque y adjacente (62) de la bride, épaulement sur lequel une collerette externe supérieure de l'entretoise (10) de transfert et répartition des charges vient en appui,
- une portion tronconique (72),
- un épaulement inférieur (73) à la jonction entre la plaque d'ancrage et la plaque située au-dessus de celle-ci,
- la paroi du trou (74) prévu pour le passage de la tige de vis, l'entretoise (10) de transfert et répartition des charges ayant une portion inférieure tubulaire cylindrique venant s'insérer dans ce trou (74) pour reposer sur l'encadrement.

10. Pare-brise d'aéronef selon l'une des revendications précédentes, **caractérisé en ce qu'**au moins l'une des cavités est délimitée par une paroi périphérique (69") formée par une face extérieure de la plaque extérieure (61") de la bride (6"), laquelle plaque extérieure (61") est rabattue vers l'intérieur de l'aéronef dans la cavité.

11. Pare-brise d'aéronef selon l'une des revendications précédentes, **caractérisé en ce qu'**il comprend :
- pour chaque vis de fixation (8), un joint sec torique (33) entre une face intérieure (67) de la bride et l'encadrement (4), lequel joint sec torique (33) entoure une portion inférieure tubulaire de l'entretoise recevant la tige de vis,
- un joint sec périphérique (34) intercalé entre une face latérale périphérique de la bride (6, 6', 6") et un flanc (44) de l'encadrement ;
- un joint sec périphérique (31) intercalé entre la plaque extérieure (61, 61', 61") de la bride et une face frontale extérieure de la glace feuilletée (2),
- un joint sec périphérique (32) intercalé entre la plaque d'ancrage (64) de la bride et un pli de la glace qui est contigu à la plaque d'ancrage.

12. Pare-brise d'aéronef selon l'une des revendications précédentes, **caractérisé en ce qu'**il comprend, pour chaque vis de fixation (8), un bouchon configuré pour fermer la niche (101) recevant la tête de vis et pour être fixé à l'entretoise de transfert et répartition des charges correspondante par emboîtement.

13. Pare-brise d'aéronef selon l'une des revendications précédentes, **caractérisé en ce que** la glace (2) intègre un circuit électrique (30) alimenté par un connecteur (36) qui est relié à la glace par un câble électrique (35) sortant de la glace.

## Patentansprüche

1. Windschutzscheibe eines Luftfahrzeugs, die Folgendes beinhaltet:
- ein Verbundfenster (2), das übereinanderliegende Lagen beinhaltet und eine Umfangskante (29) aufweist,
- einen Rahmen (4), der zu einer Primärstruktur des Luftfahrzeugs gehört,
- und einen Flansch (6), der durch Befestigungsschrauben (8), die in der Flanschdicke versenkte Schraubenköpfe aufweisen, an dem Rahmen befestigt ist,
- wobei an jeder Befestigungsschraube (8) zwischen einer äußeren Oberfläche (66) des Flansches und der Befestigungsschraube (8) ein Lastverteilungseinsatz (10, 10', 10'') eingeschoben ist, wobei in dem Flansch ein Hohlraum (68) eingebracht ist, um den Lastverteilungseinsatz aufzunehmen, wobei am Boden des Hohlraums ein Loch (74) für den Durchgang eines Schraubenschafts der Befestigungsschraube vorgesehen ist, wobei der Lastverteilungseinsatz eine Aussparung (101) für die Aufnahme des Schraubenkopfes und eine Bohrung (102) für den Durchgang des Schraubenschafts aufweist,
**dadurch gekennzeichnet, dass** der Flansch an der Umfangskante (29) des Fensters befestigt ist und übereinanderliegende Platten beinhaltet, wobei eine äußere Platte (61, 61', 61") die Umfangskante (29) des Verbundfensters abdeckt und eine innere Platte (65) eine innere Oberfläche des Flansches bildet, von der mindestens ein Teil an einem Flügel (41) des Rahmens anliegt, und dass mindestens eine der Platten des Flansches (64), die als Verankerungsplatte bezeichnet wird, entlang der Umfangskante (29) des Fensters zwischen zwei Lagen (21, 23) des Fensters eingebettet ist.

2. Windschutzscheibe eines Luftfahrzeugs nach Anspruch 1, **dadurch gekennzeichnet, dass** sich der Hohlraum (68) und der Einsatz (10, 10', 10") mindestens bis zur Verankerungsplatte (64) in die Dicke des Flansches erstrecken.

3. Windschutzscheibe eines Luftfahrzeugs nach einem der Ansprüche 1 oder 2, **dadurch gekennzeichnet, dass** die Befestigungsschrauben (8) Sechskantschrauben sind und dass die Aussparung (101) der Lastverteilungseinsätze einen Boden mit ebener Oberfläche aufweist.

4. Windschutzscheibe eines Luftfahrzeugs nach einem der vorhergehenden Ansprüche, **dadurch gekennzeichnet, dass** die Verankerungsplatte (64) eine Zwischenplatte zwischen der äußeren Platte (61) und der inneren Platte (65) ist.

5. Windschutzscheibe eines Luftfahrzeugs nach einem der vorhergehenden Ansprüche, **dadurch gekennzeichnet, dass** die Verankerungsplatte (64) über eine Verankerungstiefe von mindestens gleich 10 mm in das Verbundfenster eindringt.

6. Windschutzscheibe eines Luftfahrzeugs nach einem der vorhergehenden Ansprüche, **dadurch gekennzeichnet, dass** jeder Hohlraum eine von der Außenseite des Luftfahrzeugs her abnehmende Breite aufweist.

7. Windschutzscheibe eines Luftfahrzeugs nach einem der vorhergehenden Ansprüche, **dadurch gekennzeichnet, dass** mindestens ein Hohlraum (68) durch eine Umfangswand (69, 69') abgegrenzt wird, die durch Teilabschnitte der Platten des Flansches gebildet wird.

8. Windschutzscheibe eines Luftfahrzeugs nach einem der vorhergehenden Ansprüche, **dadurch gekennzeichnet, dass** mindestens ein Hohlraum durch eine Umfangswand (69') abgegrenzt wird, die von der Innenseite zur Außenseite des Luftfahrzeugs Folgendes beinhaltet:
- die Wand des Lochs (74), das in der inneren Platte (65) des Flansches (6') für den Durchgang des Schraubenschafts vorgesehen ist, wobei der Lastverteilungseinsatz (10') einen zylindrischen rohrförmigen unteren Abschnitt aufweist, der sich in dieses Loch (74) einfügt, um auf dem Rahmen zu ruhen,
- einen treppenförmigen Abschnitt, der durch Teilabschnitte der Platten des Flansches gebildet wird, wobei der Lastverteilungseinsatz (10') eine externe Seitenfläche mit aufeinanderfolgenden Stufen aufweist, die zu dem treppenförmigen Abschnitt der Umfangswand des Hohlraums komplementär ist.

9. Windschutzscheibe eines Luftfahrzeugs nach einem der vorhergehenden Ansprüche, **dadurch gekennzeichnet, dass** mindestens einer der Hohlräume (68) durch eine Wand (69) abgegrenzt wird, die durch Teilabschnitte der Platten des Flansches gebildet wird und die von der Außenseite zur Innenseite des Luftfahrzeugs Folgendes beinhaltet:
- eine obere Stufe (71) an der Verbindungsstelle zwischen der äußeren Platte (61) und der daran angrenzenden Platte (62) des Flansches, wobei auf dieser Stufe ein oberer externer Bund des Lastverteilungseinsatzes (10) zu liegen kommt,
- einen kegelstumpfförmigen Abschnitt (72),
- eine untere Stufe (73) an der Verbindungsstelle zwischen der Verankerungsplatte und der Platte, die über dieser gelegen ist,
- die Wand des Lochs (74), das für den Durchgang des Schraubenschafts vorgesehen ist, wobei der Lastverteilungseinsatz (10) einen zylindrischen rohrförmigen unteren Abschnitt aufweist, der sich in dieses Loch (74) einfügt, um auf dem Rahmen zu ruhen.

10. Windschutzscheibe eines Luftfahrzeugs nach einem der vorhergehenden Ansprüche, **dadurch gekennzeichnet, dass** mindestens einer der Hohlräume durch eine Umfangswand (69' ') abgegrenzt wird, die durch eine äußere Fläche der äußeren Platte (61 ' ') des Flansches (6 ' ') gebildet wird, wobei die äußere Platte (61") in dem Hohlraum zur Innenseite des Luftfahrzeugs hin gebogen ist.

11. Windschutzscheibe eines Luftfahrzeugs nach einem der vorhergehenden Ansprüche, **dadurch gekennzeichnet, dass** sie Folgendes beinhaltet:
- für jede Befestigungsschraube (8) einen trockenen O-Ring (33) zwischen einer inneren Fläche (67) des Flansches und dem Rahmen (4), wobei der trockene O-Ring (33) einen rohrförmigen unteren Abschnitt des Einsatzes, der den Schraubenschaft aufnimmt, umgibt,
- eine trockene Umfangsdichtung (34), die zwischen einer Umfangsseitenfläche des Flansches (6, 6', 6") und einer Flanke (44) des Rahmens eingeschoben ist;
- eine trockene Umfangsdichtung (31), die zwischen der äußeren Platte (61, 61', 61") des Flansches und einer äußeren Stirnfläche des Verbundfensters (2) eingeschoben ist,
- eine trockene Umfangsdichtung (32), die zwischen der Verankerungsplatte (64) des Flansches und einer Lage des Fensters, die an die Verankerungsplatte grenzt, eingeschoben ist.

12. Windschutzscheibe eines Luftfahrzeugs nach einem der vorhergehenden Ansprüche, **dadurch gekennzeichnet, dass** sie für jede Befestigungsschraube (8) einen Deckel beinhaltet, der konfiguriert ist, um die Aussparung (101), die den Schraubenkopf aufnimmt, zu verschließen und an dem entsprechenden Lastverteilungseinsatz formschlüssig befestigt zu werden.

13. Windschutzscheibe eines Luftfahrzeugs nach einem der vorhergehenden Ansprüche, **dadurch gekennzeichnet, dass** das Fenster (2) einen Stromkreis (30) umfasst, der über einen Stecker (36), der durch ein aus dem Fenster austretendes elektrisches Kabel (35) mit dem Fenster verbunden ist, mit Strom versorgt wird.

## Claims

1. Aircraft windscreen comprising:
- a laminated window pane (2), comprising a superposition of plies and having a peripheral edge (29),
- a frame (4) belonging to a primary structure of the aircraft,
- and a flange (6) fastened to the frame by fastening screws (8) having screw heads retracted into the thickness of the flange,
- at each fastening screw (8), a load-transferring and distributing member (10, 10', 10") is inserted between an outer surface (66) of the flange and said fastening screw (8), a cavity (68) being arranged in the flange to accommodate the load-transferring and distributing member, a hole (74) being provided at the bottom of the cavity for passing a screw shank of the fastening screw, the load-transferring and distributing member in turn having a recess (101) for accommodating the screw head and a drilled hole (102) for passing the screw shank,
**characterised in that** the flange is fastened to the peripheral edge (29) of the window pane and comprises a superposition of plates including an outer plate (61, 61*',* 61")covering the peripheral edge (29) of the laminated window pane and an inner plate (65) forming an inner surface of the flange, at least part of which bears against a web (41) of the frame, and **in that** at least one of the plates (64) of the flange, qualified as anchoring plate, is embedded between two plies (21,23) of the window pane along the peripheral edge (29) of the window pane.

2. Aircraft windscreen according to Claim 1, **characterised in that** the cavity (68) and the member (10, 10', 10") sink into the thickness of the flange at least down to the anchoring plate (64).

3. Aircraft windscreen according to either Claim 1 or 2, **characterised in that** the fastening screws (8) are hexagon-head screws and **in that** the recess (101) of the load-transferring and distributing members has a bottom with a flat surface.

4. Aircraft windscreen according to one of the preceding claims, **characterised in that** the anchoring plate (64) is an intermediate plate between the outer plate (61) and the inner plate (65).

5. Aircraft windscreen according to one of the preceding claims, **characterised in that** the anchoring plate (64) penetrates the laminated window pane over an anchoring depth equal to at least 10 mm.

6. Aircraft windscreen according to one of the preceding claims, **characterised in that** each cavity has a width decreasing from the outside of the aircraft.

7. Aircraft windscreen according to one of the preceding claims, **characterised in that** at least one cavity (68) is delimited by a peripheral wall (69, 69') formed by sections of the plates of the flange.

8. Aircraft windscreen according to one of the preceding claims, **characterised in that** at least one cavity is delimited by a peripheral wall (69') comprising, from the inside to the outside of the aircraft:
- the wall of the hole (74) made in the inner plate (65) of the flange (6*'*) for passing the screw shank, the load-transferring and distributing member (10') having a cylindrical tubular lower portion inserted in this hole (74) so as to rest on the frame,
- a stepped portion formed by sections of the plates of the flange, the load-transferring and distributing member (10') having an outer lateral side with successive projections that is complementary to the stepped portion of the peripheral wall of the cavity.

9. Aircraft windscreen according to one of the preceding claims, **characterised in that** at least one of the cavities (68) is delimited by a wall (69) formed by sections of the plates of the flange and that comprises, from the outside to the inside of the aircraft:
- an upper projection (71) at the junction between the outer plate (61) and the plate (62) adjacent to it of the flange, projection on which an upper outer collar of the load-transferring and distributing member (10) comes to bear,
- a frustoconical portion (72),
- a lower projection (73) at the junction between the anchoring plate and the plate situated above it,
- the wall of the hole (74) made for passing the screw shank, the load-transferring and distributing member (10) having a cylindrical tubular lower portion inserted in this hole (74) so as to rest on the frame.

10. Aircraft windscreen according to one of the preceding claims, **characterised in that** at least one of the cavities is delimited by a peripheral wall (69") formed by an outer side of the outer plate (61") of the flange (6"), said outer plate (61") turns down into the cavity towards the inside of the aircraft.

11. Aircraft windscreen according to one of the preceding claims, **characterised in that** it comprises:
- for each fastening screw (8), a dry O ring seal (33) between an inner side (67) of the flange and the frame (4), said dry O ring seal (33) surrounds a tubular lower portion of the member accommodating the screw shank,
- a dry peripheral seal (34), interposed between a peripheral lateral side of the flange (6, 6', 6") and a flank (44) of the frame,
- a dry peripheral seal (31), interposed between the outer plate (61, 61', 61") of the flange and an outer front side of the laminated window pane (2),
- a dry peripheral seal (32), interposed between the anchoring plate (64) of the flange and a ply of the window pane that is contiguous with the anchoring plate.

12. Aircraft windscreen according to one of the preceding claims, **characterised in that** it comprises, for each fastening screw (8), a plug configured to close the recess (101) accommodating the screw head, and to be fastened to the corresponding load-transferring and distributing member by interlocking.

13. Aircraft windscreen according to one of the preceding claims, **characterised in that** the window pane (2) integrates an electric circuit (30) powered by a connector (36) that is connected to the window pane by an electric cable (35) emerging from the window pane.
